## Europäisches Patentamt
## European Patent Office
## Office européen des brevets

(19)

(11) Veröffentlichungsnummer: **0 034 640**
**B1**

(12) # EUROPÄISCHE PATENTSCHRIFT

(45) Veröffentlichungstag der Patentschrift:
**21.09.83**

(51) Int. Cl.³: **F 16 H 25/20**

(21) Anmeldenummer: **80100916.8**

(22) Anmeldetag: **25.02.80**

(54) **Schraubenantrieb.**

(43) Veröffentlichungstag der Anmeldung:
**02.09.81 Patentblatt 81/35**

(45) Bekanntmachung des Hinweises auf die Patenterteilung:
**21.09.83 Patentblatt 83/38**

(84) Benannte Vertragsstaaten:
**CH FR GB SE**

(56) Entgegenhaltungen:
**DE-A-2 122 753**
**DE-A-2 535 787**
**DE-A-2 725 054**
**DE-B-2 262 062**

(73) Patentinhaber: **Gärtner, Robert, Dr.,**
**Freiherr-vom-Stein-Strasse 8, D-6308 Butzbach/Hessen**
**(DE)**

(72) Erfinder: **Gärtner, Robert, Dr.,**
**Freiherr-vom-Stein-Strasse 8, D-6308 Butzbach/Hessen**
**(DE)**

(74) Vertreter: **Wangemann, Horst, Dipl.-Ing.,**
**Stresemannstrasse 28, D-4000 Düsseldorf (DE)**

ACTORUM AG

Schraubenantrieb

Die Erfindung betrifft einen Schraubenantrieb mit einer Spindel und einem Führungsrahmen mit einer von der Spindel durchsetzten Kopfplatte und einer Fussplatte sowie mit zur Spindelachse exzentrischen Wälzringlagern mit einem an dem Innenring jedes Wälzringlagers angeordneten und in das Gewinde der Spindel eingreifenden Ringwulst, wobei jedes Wälzringlager zwischen zwei parallelen Blattfedern angeordnet ist und von diesen derart gehalten wird, dass es um eine in Richtung seiner Exzentrizität zur Spindelachse gelegene Achse um zwei Lagerzapfen schwenkbar und in Richtung dieser Achse bewegbar ist.

Durch die DE-B Nr. 2262062 ist ein Schraubenantrieb dieser Art bekannt, bei dem jedem Wälzlager ein eigener Federrahmen zugeordnet ist, der bei hoher Lastaufnahme, da nur einseitig befestigt, einem hohen Kippmoment in Spindelachsrichtung an dem Führungsrahmen ausgesetzt ist. Der Führungsrahmen selbst neigt hierbei leicht zum Verkannten gegenüber der Spindel, wie auch der Schraubenantrieb bei Anordnung mehrerer Wälzlagerringe einen erheblichen Platz sowohl in Längsrichtung als auch neben dem Antrieb selbst in Anspruch nimmt.

Der Erfindung liegt daher die Aufgabe zugrunde, einen Schraubenantrieb der eingangs genannten Gattung zu schaffen, bei welchem einerseits eine hohe Lastübertragung ohne Neigung des Antriebs zum Kanten möglich ist, andererseits der Rahmen und die daran angeordneten Teile einen geringen Platz in Anspruch nehmen. Der Rahmen und die daran angeordneten Teile sollen darüber hinaus einen einfachen konstruktiven Aufbau besitzen.

Zur Lösung dieser Aufgabe sieht die Erfindung bei einem Schraubenantrieb der genannten Gattung vor, dass die Blattfedern zwei gegenüberliegende Längsseitenwände des Rahmens bilden oder in der Ebene der Längsseitenwände des Rahmens gelegen sind, wobei die die Spindel umgebenden Wälzringlager in Spindellängsrichtung abwechselnd in einer der Blattfedern gehalten sind, und jeweils einer der Lagerzapfen der Wälzringlager in einer Bohrung der jeweils anderen Blattfeder axial verschiebbar ist.

Durch die DE-A Nr. 2725054 ist ein Schraubenantrieb mit einem Rahmen bekannt, dessen Fussund Kopfplatte von der Spindel durchsetzt wird, wobei die beiden Platten durch an ihrem Ende an die Platten umgebogenen Seitenstreben miteinander verbunden sind, in die die Wälzlagerringe tragenden Lager eingesetzt sind. Die Wälzlager sind in Spindellängsrichtung wechselseitig um ihre Exzentrizität gegenüber der Spindellängsachse versetzt. Auch aus dieser Vorveröffentlichung konnte der Fachmann nicht den erfinderischen Gedanken gewinnen, beide die Wälzlagerzapfen tragenden Teile federnd zu gestalten und jeweils einen Zapfen unverschieblich mit der einen Feder zu verbinden, um das Wälzlager federnd anzuordnen, den anderen Zapfen dagegen in der gegenüberliegenden Blattfeder verschieblich zu halten. Hierdurch nämlich beaufschlagen die Wälzlagerringe jede der beiden Federn nur immer in einer Richtung, d.h. nach aussen, wodurch die Federwirkung gegeben ist. Würden die Schwenkzapfen beider Wälzlagerringe in beiden Federn unverschieblich gehalten sein, würden sich bei Aufeinanderfolge der wechselseitigen Anordnung der Lageranordnung der Zapfen in den Federn diese wie starre Stege verhalten, da die wechselseitig nach aussen gerichteten Kräfte der Wälzlager einander entgegensetzt gerichtet sind und sich aufheben.

Die Unteransprüche geben vorteilhafte Ausbildungen und Verbesserungen des Gegenstandes nach dem Hauptanspruch an.

Auf der Zeichnung ist ein Ausführungsbeispiel des erfindungsgemässen Schraubenantriebs dargestellt und zwar zeigt:

Fig. 1 den Rahmen des Antriebs in perspektivischer Ansicht,

Fig. 2 die Draufsicht auf die Kopf- bzw. Fussplatte des Rahmens, und

Fig. 3 einen Vertikalschnitt durch den Rahmen mit der von ihm umschlossenen Spindel.

Der erfindungsgemässe Schraubenantrieb wird im wesentlichen aus der Gewindespindel 1 und dem Rahmen 2 mit den daran angeordneten Teilen gebildet. Das Gewinde der Spindel kann ein flach- oder halbsteilgängiges Trapezgewinde sein, das die Gewinderippe 3 und die Gewindenut 4 aufweist.

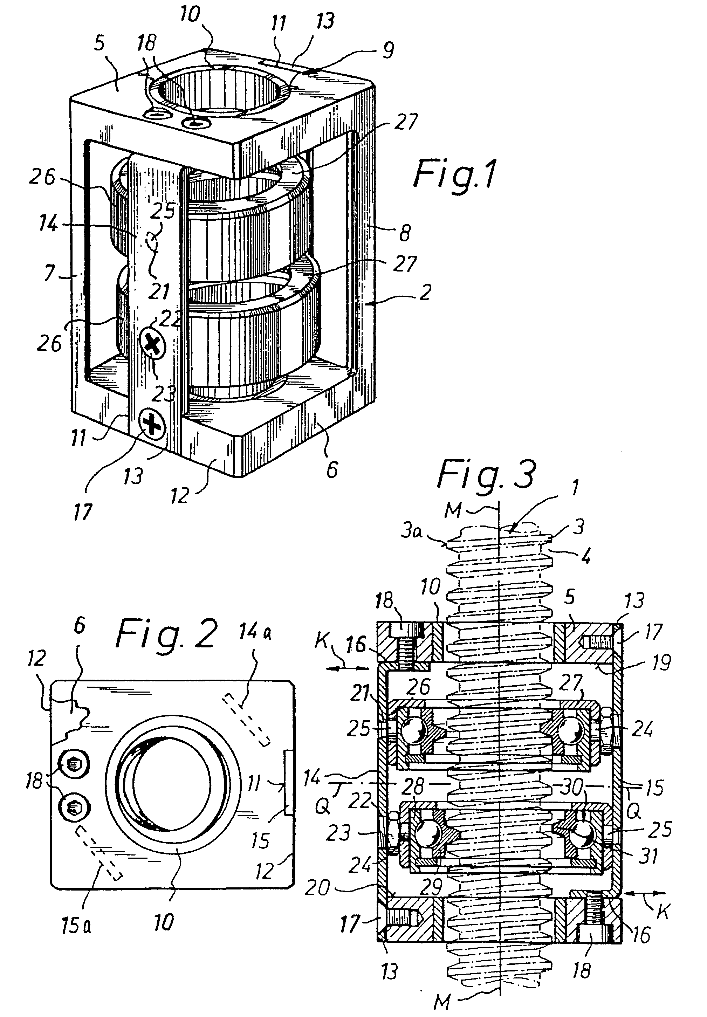

Der Rahmen 2 besitzt in dargestelltem Beispiel eine Kopfplatte 5 und eine Fussplatte 6. Diese Bezeichnungen sind ebenso als beidseitige Endplatten zu verstehen, wenn die Gewindespindel — statt wie in Fig. 1 und 3 wiedergegeben — in waagerechter Richtung verläuft. Die beiden Platten 5, 6 bestehen aus rechteckigen Materialstükken, die einteilig mit zwei sich diametral gegenüberliegenden Streben 7, 8 miteinander verbunden sind. Die Teile 5 bis 8 können einen Gusskörper bilden. In der Mitte jeder Platte 5, 6 ist eine runde Bohrung 9 mit einer vorzugsweise aus Kunststoff bestehenden Einlagerung 10 angeordnet. Statt dieses glattwandigen Ringes, dessen Durchmesser etwa dem Aussendurchmesser der Gewinderippe 3 der Spindel 1 derart entspricht, dass der Rahmen durch den Ring 10 jeder Platte am Umfang 3a der Gewindespindelrippe 3 geführt wird, kann auch ein Ring vorgesehen werden, dessen Innenseite mit einem in das Gewinde der Gewindespindel 1 eingreifenden Gewinde versehen ist.

Jede der beiden Platten 5, 6 besitzt eine nach aussen offene viereckige Aussparung 11, deren Tiefe der Dicke der nachstehend noch beschriebenen Blattfedern entspricht. Die Aussparungen liegen sich drehsymmetrisch in bezug auf die Quermittelebene Q des Rahmens 2 gegenüber und sind in der Mitte der Seitenwand 12 der Platten 5, 6 angeordnet. In die genannten Aussparungen 11 greift das eine Ende 13 je einer Blattfeder 14, 15 ein, die beide gleichartig ausgebildet sind, ein nach innen, d.h. zur Spindel 1 hin gerichtetes Ende 16 besitzen und ebenfalls drehsymmetrisch zur Quermittelebene Q des Rahmens 2 angeordnet sind. Während das Ende 13 der beiden Federn mit je einer radial zur Spindelmutter 1 gerichteten Schraube 17 an der Platte 5 bzw. 6 befestigt ist, ist das abgewinkelte Ende 16 jeder Blattfeder 14, 15 durch ein oder zwei parallel zur Spindelachse 1 verlaufende Schrauben 18 an der Platte 5 bzw. 6 gehalten. Die Länge der Blattfedern ist so bemessen, dass das umgebogene Ende 16 der blattfedern 14, 15 auf der Innenseite 19, 20 der Platte 5 bzw. 6 aufliegt, ohne dass die Blattfedern 14, 15 hierbei nach aussen oder innen gewölbt werden bzw. unter besonderer Längsspannung gesetzt werden.

Die Enden 16 der beiden Blattfedern 14, 15 können in Richtung des Doppelpfeiles K geringfügig ausweichen, da die Schrauben 18 in den Platten 5, 6 in kurzen Langlöchern gehalten sind, deren Längsachse in Richtung der Pfeile K gelegen ist.

Vorzugsweise im gleichen Abstand von den Innenseiten 19, 20 der beiden Platten 5, 6 tragen die beiden Blattfedern 14, 15 koaxiale Bohrungen 21, 22, von denen die grössere Bohrung 22 ein Gewinde besitzt, während die Bohrung 21 glattwandig ausgebildet ist. In die grössere, mit einem Gewinde versehene Bohrung 22 ist das Gewinde 23 eines Achszapfens 24 einschraubbar, während in die glattwandige Bohrung 21 der beiden Blattfedern der Achszapfen 25 hineinragt. Auf den Achszapfen 24, 25 ist ein Tragring 26 schwenkbar gelagert, der einen einwärts gerichteten Flansch 27 trägt, gegen den die eine Stirnseite eines äusseren Ringes 28 und eines inneren Ringes 29 eines mit der allgemeinen Bezugsziffer 30 versehenen Wälzringlagers anliegen. Der Innenring 29 des Wälzringlagers 30 trägt einen Ringwulst 31, dessen Querschnitt dem der Gewindenut 4 entspricht, in die er unter Anlage an den Rippenflanken eingreift. Wie Fig. 2 und 3 erkennen lassen, sind die beiden Tragringe 26 und ihre Wälzringlager exzentrisch zur Mittellängsachse M der Spindel 1 gelegen. Beide Wälzringlager 30 haben dieselbe Exzentrizität, da auch sie drehsymmetrisch zur Quermittelachse Q des Rahmens 2 in diesem angeordnet sind.

Statt der Anordnung der beiden Blattfedern 14, 15 an den Seiten des Rahmens 2 kann auch in äquivalenter Ausführungsform die Anordnung der Blattfedern an den Ecken einer viereckigen Kopf- und Fussplatte vorgesehen werden, wie dies in punktierter Linie 14a und 15a in Fig. 2 wiedergegeben ist.

Die Zeichnung lässt erkennen, dass der als Gewindemutter dienende Rahmen 2 einteilig ausgebildet werden kann, die die Wälzringlager haltenden Blattfedern 14, 15 gleichartig gestaltet sind und dass insgesamt der Rahmen trotz hoher Kraftübertragung einen geringen Platz um die Spindel herum benötigt, wobei die Wälzringlager einerseits sich in ihrer Schwenkbarkeit der Steigung des Spindelganges anpassen und die Möglichkeit einer federnden Verstellung der Wälzringlager gegeben ist, so dass ein optimales Abwälzen des Wulstes 31 der Wälzringlager an dem Gewinde der Spindel 1 gegeben ist.

In dargestelltem Beispiel in Fig. 3 ist der Achszapfen 25 in seiner Bohrung 21 in den Blattfedern 14, 15 frei verschieblich. Hierdurch wirkt nur jeweils eine Feder radial auf jeden Wälzlagerring ein, der über den in die eine Blattfeder einschraubbaren Achszapfen 24 mit diesem radial verbunden ist. Diese Verbindung ist jeweils dem Fussende 13 der entsprechenden Blattfeder 14 bzw. 15 benachbart, während der frei verschiebliche Achszapfen 25 dem umgebogenen Federende 16 benachbart ist.

## Patentansprüche

1. Schraubenantrieb mit einer Spindel (1) und einem Führungsrahmen (2) mit einer von der Spindel (1) durchsetzten Kopfplatte (5) und einer Fussplatte (6) sowie mit zur Spindelachse exzentrischen Wälzringlagers (30) mit einem an dem Innenring (29) jedes Wälzringlagers (30) angeordneten und in das Gewinde der Spindel (1) eingreifenden Ringwulst (31), wobei jedes Wälzringlager (30) zwischen zwei parallelen Blattfedern (14, 15) angeordnet ist und von diesen derart gehalten wird, dass es um eine in Richtung seiner Exzentrizität zur Spindelachse gelegene Achse um zwei Lagerzapfen (24, 25) schwenkbar und in Richtung dieser Achse bewegbar ist, dadurch gekennzeichnet, dass die Blattfedern (14, 15) zwei gegenüberliegende Längsseitenwände des Rahmens (2) bilden oder in der Ebene der Längsseitenwände des Rahmens (2) gelegen sind, wobei die die Spindel (1) umgebenden Wälzringlager (30) in Spindellängsrichtung abwechselnd in einer der Blattfedern (14, 15) gehalten sind, und jeweils einer (25) der Lagerzapfen der Wälzringlager (30) in einer Bohrung (21) der jeweils anderen Blattfeder axial verschiebbar ist.

2. Schraubenantrieb nach Anspruch 1, dadurch gekennzeichnet, dass die Kopf- und Fussplatte (5, 6) durch quersteife Streben (7, 8) neben den Blattfedern (14, 15) verbunden sind.

3. Schraubenantrieb nach den Ansprüchen 1 und 2, dadurch gekennzeichnet, dass das eine Ende (16) der Blattfedern (14, 15) an oder in die Ebene der Kopf- oder Fussplatte (5, 6) umgebogen und von einem Befestigungsmittel (18) gehalten ist, das in einem in Federrichtung der Blattfeder (14, 15) gelegenen Langloch geführt ist.

4. Schraubenantrieb nach den Ansprüchen 1 und 3, dadurch gekennzeichnet, dass der dem an der Kopf- oder Fussplatte (5, 6) umgebogenen Federende (16) benachbarte Achszapfen (25) axial in der Blattfeder (14, 15) verschieblich ist.

## Revendications

1. Mécanisme à vis comprenant une broche (1) et un cadre de guidage (2) comportant une plaque supérieure (5) traversée par la broche (1) et une plaque d'assise (6), des coussinets annulaires (30) excentrés par rapport à l'axe de la broche et comportant un bourrelet annulaire (31) situé au niveau de l'anneau intérieur (29) de chacun des coussinets annulaires (30) et s'engageant dans le filetage de la broche (1), chacun de ces coussinets annulaires (30) étant situé entre deux ressorts en feuille (14, 15) parallèles et maintenus par eux de telle manière qu'il peut tourner sur deux tourillons (24, 25) autour d'un axe décalé dans le sens de son excentricité par rapport à l'axe de la broche et se déplacer dans le sens de cet axe, caractérisé en ce que les ressorts en feuille (14, 15) constituent deux parois longitudinales opposées du cadre (2) ou sont situés dans le plan des parois longitudinales du cadre (2), les coussinets annulaires (30) qui entourent la broche (1) étant alternativement maintenus dans l'un des ressorts en feuille (14, 15) et chacun des tourillons (25) des coussinets annulaires (30) pouvant se déplacer dans le sens axial dans une ouverture (21) de l'autre ressort en feuille correspondant.

2. Mécanisme à vis selon la revendication 1, caractérisé en ce que la plaque supérieure et la plaque d'assise (5, 6) sont reliées par des montants (7, 8) raidis transversalement à côté des ressorts en feuille (14, 15).

3. Mécanisme à vis selon les revendications 1 et 2, caractérisé en ce que l'une des extrémités (16) des ressorts en feuille (14, 15) est pliée près de ou dans le plan de la plaque supérieure ou de la plaque d'assise (5, 6) et est maintenue par un dispositif de fixation (18) qui est guidé dans un trou oblong orienté dans le sens d'élasticité du ressort en feuille (14, 15).

4. Mécanisme à vis selon les revendications 1 et 3, caractérisé en ce que le tourillon (25) situé à proximité de l'extrémité (16) pliée au niveau de la plaque supérieure ou de la plaque d'assise (5, 6) peut se déplacer dans le sens axial dans le ressort en feuille (14, 15).

**Claims**

1. A screw mechanism with a lead screw (1) and a guide frame (2), with a head plate (5) having the lead screw (1) running through it and a foot plate (6) and furthermore rolling element bearings (30), that are eccentric in relation to the axis of the lead screw, with a round bead (31) placed on the inner race ring (29) of each rolling element bearing (30), said round bead (31) fitting into the thread of the lead screw (1), each rolling element bearing (30) being placed between two parallel leaf springs (14 and 15) so that it is so kept in position thereby that it may be rocked about an axis placed in the direction of its eccentricity in relation to the lead screw axis about two bearing pins (24 and 25) and may be moved in translation in the direction of this axis, characterized in that the leaf springs (14 and 15) take the form of two opposite lengthways side walls of the frame (2) or are placed in the plane of the lengthways side walls of the frame (2), and the rolling element bearings (30) placed round the lead screw (1) are kept in position in the length direction of the lead screw in turn in one of the leaf springs (14 and 15) and then in the other one thereof, and one of the bearing pins of the rolling element bearings (30) may be moved axially in a hole (21) of the other leaf spring in question.

2. The screw mechanism as claimed in claim 1, characterized in that the head and foot plates (5 and 6) are joined together by transversely stiff struts (7 and 8) next to the leaf springs (14 and 15).

3. The screw mechanism as claimed in claims 1 and 2, characterized in that the one end (16) of the leaf springs (14 and 15) are bent round at or into the plane of the head or the foot plate (5 and 6), and kept in position by fixing means (18), that is guided in a slot running in the spring direction of the leaf springs (14 and 15).

4. The screw mechanism as claimed in claims 1 and 3, characterized in that the pin (25) next to the spring end (16) bent round at the head or foot plate (5 and 6) is able to be moved axially in the leaf spring (14 and 15).

0 034 640

Fig.1

Fig.2

Fig. 3

5